Europäisches Patentamt

**European Patent Office**

Office européen des brevets

(19)

(11) Numéro de publication : **0 040 159**
**B1**

(12) FASCICULE DE BREVET EUROPÉEN

(45) Date de publication du fascicule du brevet :
28.12.83

(51) Int. Cl.³ : **B 25 J 19/00**

(21) Numéro de dépôt : **81400762.1**

(22) Date de dépôt : **13.05.81**

(54) **Manipulateur.**

(30) Priorité : **14.05.80 FR 8010891**

(43) Date de publication de la demande :
**18.11.81 Bulletin 81/46**

(45) Mention de la délivrance du brevet :
**28.12.83 Bulletin 83/52**

(84) Etats contractants désignés :
**BE CH DE GB IT LI**

(56) Documents cités :
**GB-A- 2 041 879**
**US-A- 3 482 711**
**US-A- 4 187 051**
**INDUSTRIAL MANIPULATORS, SCIENTIFIC AMERI-
CAN, vol. 211, no. 4, octobre 1964 Edit. : Scientific
American Inc., New York, US R.S. MOSHER: "Many
tasks done by human hands cannot yet be taken up
by automatic machines. Machines can, however,
extend the capacities of the hand, and they suggest
ways in which manipulation can be made automatic",
pages 88-96**

(73) Titulaire : **COMMISSARIAT A L'ENERGIE ATOMIQUE
Etablissement de Caractère Scientifique Technique
et Industriel
B.P. 510
F-75752 Paris Cedex 15 (FR)**

(72) Inventeur : **Moreau, Claude
34, rue Desgrées du Lou
F-44000 Nantes (FR)**
Inventeur : **Francois, Daniel
17, rue des Ruelles
F-41100 Vendôme (FR)**
Inventeur : **Marchal, Paul
1-13, Résidence du Parc du Château de Courcelles
F-91190 Gif-sur-Yvette (FR)**
Inventeur : **Streiff, Gérard
687 Chemin de la Croix Joannis
F-84140 Montfavet (FR)**
Inventeur : **Vertut, Jean
3, rue J.E. Voisembert
F-92130 Issy Les Moulineaux (FR)**

(74) Mandataire : **Mongrédien, André et al
c/o BREVATOME 25, rue de Ponthieu
F-75008 Paris (FR)**

Manipulateur

La présente invention a pour objet un manipulateur permettant de travailler avec précision dans des endroits difficilement accessibles et en milieu hostile, ainsi qu'un support d'orientation motorisé constituant une partie importante de ce manipulateur.

Il existe actuellement de nombreux types de manipulateurs qui sont utilisés en milieu hostile ou dangereux, et notamment dans le domaine nucléaire, pour effectuer à distance différentes manipulations. Le type du manipulateur utilisé est généralement choisi en fonction de la précision du travail à effectuer et de l'importance des charges à déplacer, en donnant la priorité à l'une ou à l'autre de ces grandeurs.

Ainsi, lorsqu'on a besoin de manipulateurs de forte capacité, il est courant d'utiliser des manipulateurs dits lourds ou motorisés. Ces manipulateurs comprennent généralement un ensemble porteur constitué par un pont roulant dont le chariot mobile porte un bras télescopique muni directement à son extrémité inférieure d'un bras articulé comportant deux ou trois segments. Le pont roulant et le bras télescopique constituant l'ensemble porteur définissent trois degrés de liberté assurant le positionnement du bras articulé selon des coordonnées cartésiennes, alors que les mouvements des segments articulés sont généralement des mouvements de pivotement donnant au bras articulé l'aspect approximatif d'un bras humain. Le pont roulant peut être horizontal et le bras télescopique vertical. Inversement, le pont roulant peut être vertical, remplacé par des poutres roulantes et par un chariot se déplaçant dans un plan vertical, le bras télescopique étant alors horizontal. Dans tous les cas, ces manipulateurs de forte capacité se caractérisent par le fait qu'ils sont destinés à des travaux de faible précision. En outre, ils portent toujours un seul bras articulé.

Au contraire, lorsqu'on doit effectuer une manipulation précise, on utilise couramment des manipulateurs à poste fixe du type maître-esclave qui traversent la paroi de l'enceinte de manipulation. Ces manipulateurs peuvent maintenant être remplacés par une génération plus récente de manipulateurs de grande dextérité, à asservissement et retour d'effort. Ces derniers manipulateurs présentent la même dextérité que les manipulateurs à poste fixe et ils présentent l'avantage de supprimer la traversée mécanique de la paroi des enceintes où ils sont destinés à l'exécution de tâches que l'homme ne peut réaliser directement, faute de pouvoir jamais pénétrer dans ce milieu hostile, nucléaire ou autre. Cependant, ces manipulateurs de précision encore peu employés, sont généralement fixés directement à la base d'un bras télescopique ou de tout autre moyen de levage existant, de sorte qu'ils peuvent balayer un espace relativement grand sans toutefois permettre leur utilisation lorsque l'accès à la zone de travail est difficile soit par limitation de l'espace, soit par nécessité d'orientation particulière.

Cet exposé des différents types de manipulateurs existant actuellement montre qu'il n'existe pas de manipulateurs présentant à la fois les caractéristiques de précision des manipulateurs maître-esclave, les possibilités de positionnement de la partie active du manipulateur données par l'ensemble porteur dans les manipulateurs lourds et des possibilités complémentaires d'orientation par rapport aux obstacles. De plus, lorsqu'une manipulation nécessite la présence de deux manipulateurs dans un endroit d'accès difficile, il est nécessaire de prévoir deux ensembles porteurs munis chacun d'un bras articulé.

La présente invention a pour objet la réalisation d'un manipulateur présentant à la fois les possibilités de positionnement des manipulateurs à pont roulant et à bras télescopique, la précision des manipulateurs à asservissement et retour d'effort et les possibilités complémentaires d'orientation notamment pour le contournement d'obstacles. De façon plus précise, il est proposé de faire supporter au moins un manipulateur de précision par l'ensemble porteur d'un manipulateur lourd en disposant entre ces manipulateurs un support d'orientation motorisé. Ce support d'orientation doit notamment permettre le supportage simultané de deux manipulateurs de précision ou d'un manipulateur de précision et d'un bras articulé de positionnement, tout en autorisant le déplacement de ces manipulateurs à l'intérieur de l'enceinte permettant leur accès à la zone de travail, quelle que soit la situation de cette zone. Le support d'orientation du manipulateur selon l'invention doit également permettre le démontage et le montage à distance des bras articulés et porter des moyens d'observation nécessaires à son emploi en dehors d'une vue directe. Le guidage des câbles d'alimentation de l'ensemble et de transmission des signaux délivrés, notamment par ces moyens d'observation doit également être réalisé simplement au moyen de ce support afin d'éviter toute avarie et de faciliter les réparations.

A cet effet, la présente invention propose un manipulateur du type comprenant un ensemble porteur définissant trois degrés de liberté de positionnement et au moins un bras esclave articulé comportant six degrés de liberté et supporté par ledit ensemble porteur et définissant les six degrés de liberté de manipulation (voir par exemple US-A-3482711), caractérisé en ce que le bras esclave est supporté par l'ensemble porteur par l'intermédiaire d'un support d'orientation motorisé comprenant un corps monté pivotant autour d'un axe sensiblement vertical sur ledit ensemble porteur, au moins un organe support monté pivotant autour d'un axe sensiblement horizontal sur ledit corps et supportant le bras esclave par l'intermédiaire d'un dispositif de fixation verrouillable et déverrouillable à distance, des moyens pour commander le pivotement du corps autour de l'axe sensiblement vertical et des moyens pour commander le pivotement de l'organe support autour de l'axe sensiblement horizontal, des moyens d'observation de l'extrémité libre du bras esclave étant portés par l'organe support.

Dans un mode de réalisation particulier de l'invention, des câbles d'alimentation et de communication provenant de l'ensemble porteur s'enroulent sur au moins une poulie solidaire dudit corps et centrée sur l'axe de pivotement de ce dernier.

Selon une caractéristique secondaire de l'invention, le manipulateur comprend de plus des seconds moyens d'observation disposés verticalement au-dessus du bras esclave et tournant avec ledit corps autour de l'axe de pivotement de ce dernier. De préférence, les moyens d'observation sont constitués par au moins une caméra de télévision à axe orientable qui peut être commandée de l'extérieur ou directement asservie au déplacement du manipulateur.

Dans un mode de réalisation préféré de l'invention, le manipulateur comprend deux organes supports disposés de part et d'autre du corps et montés pivotants autour du même axe sensiblement horizontal, chacun des organes supports portant un bras esclave et un moyen d'observation de l'extrémité libre de ce bras. Le pivotement de chaque organe support peut alors être commandé indépendamment, par exemple par deux motoréducteurs différents.

Selon une autre caractéristique secondaire de l'invention, le dispositif de fixation du bras esclave sur l'organe support comprend de plus un axe de pivotement perpendiculaire à l'axe sensiblement horizontal et des moyens pour commander le pivotement du bras esclave autour de cet axe.

Dans une première variante de réalisation de l'invention selon laquelle l'ensemble porteur comprend un bras télescopique d'axe vertical, l'axe de pivotement du corps est confondu avec l'axe du bras télescopique, ce dernier portant à son extrémité inférieure au moins une poulie de renvoi à axe horizontal sur laquelle passe le câble avant de s'enrouler sur la poulie solidaire dudit corps, et à son extrémité supérieure au moins un ensemble dérouleur aligné verticalement avec la poulie de renvoi afin d'assurer la tension du câble correspondant.

Dans une deuxième variante de réalisation de l'invention, selon laquelle l'ensemble porteur comprend un bras télescopique à axe horizontal, le corps est monté pivotant à l'extrémité libre du bras, ce dernier portant à son autre extrémité au moins un ensemble dérouleur aligné horizontalement avec la poulie solidaire du corps, afin d'assurer la tension du câble correspondant.

On décrira maintenant, à titre d'exemples non limitatifs, différents modes de réalisation de l'invention en se référant aux dessins annexés dans lesquels :

la figure 1 est une vue en perspective d'un manipulateur illustrant un premier mode de réalisation de l'invention,

la figure 2 est une vue de face du bras télescopique, du support d'orientation motorisé et des bras esclaves portés par ce support, ces derniers étant représentés de façon schématique, du manipulateur de la figure 1,

la figure 3 est une vue de côté des parties du manipulateur représentées sur la figure 2,

la figure 4 est une vue en perspective d'un manipulateur illustrant un deuxième mode de réalisation de l'invention,

la figure 5 est une vue en perspective illustrant de façon schématique une variante de l'invention dans le mode de réalisation de la figure 4,

la figure 6 est une vue en perspective illustrant une autre variante de l'invention dans le mode de réalisation de la figure 1,

la figure 7 est une vue en coupe partielle avec rabattement montrant un mode de réalisation possible des dispositifs permettant de fixer les bras esclaves sur le support d'orientation motorisé dans les différentes variantes représentées précédemment.

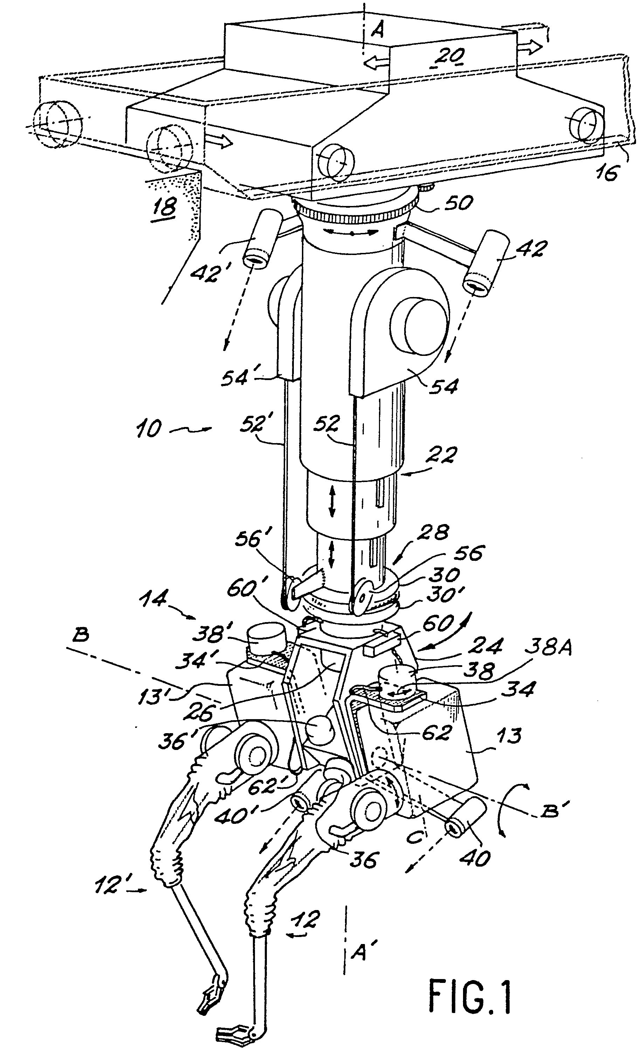

On a représenté sur les figures 1 à 3 un manipulateur comprenant un ensemble porteur 10, deux bras esclaves articulés 12 et 12' et un support d'orientation motorisé 14 au moyen duquel les bras articulés sont montés sur l'ensemble porteur.

Comme on l'a vu, l'ensemble porteur 10 correspond à l'ensemble porteur d'un manipulateur lourd de type connu. Dans le mode de réalisation des figures 1 à 3, il comprend un pont roulant horizontal qui se compose d'une poutre 16 roulant sur des rails 18 dont l'un seulement est représenté sur les figures, et d'un chariot 20 roulant sur la poutre 16. Le chariot 20 porte un bras télescopique extensible 22 définissant un axe vertical A-A'. L'ensemble porteur 10 définit ainsi à l'extrémité inférieure du bras télescopique 22 trois degrés de liberté assurant le positionnement de cette extrémité en coordonnées cartésiennes.

Le bras télescopique 22 porte le support d'orientation 14 à son extrémité inférieure. Ce support d'orientation comprend un corps 24, constitué ici par deux plaques verticales et parallèles symétriques par rapport à l'axe A-A' du bras 22. Le corps 24 est monté pivotant autour d'un axe confondu avec l'axe A-A'. La rotation du corps 24 est commandée par un motoréducteur 26 porté par ce dernier, ce motoréducteur pouvant être disposé en-dessous d'une bride 28 également solidaire du corps 24 et placée à la partie supérieure de ce dernier. La bride 28 définit deux poulies superposées 30 et 30' dont l'axe est confondu avec l'axe A-A'. La fonction de ces poulies sera explicitée ultérieurement.

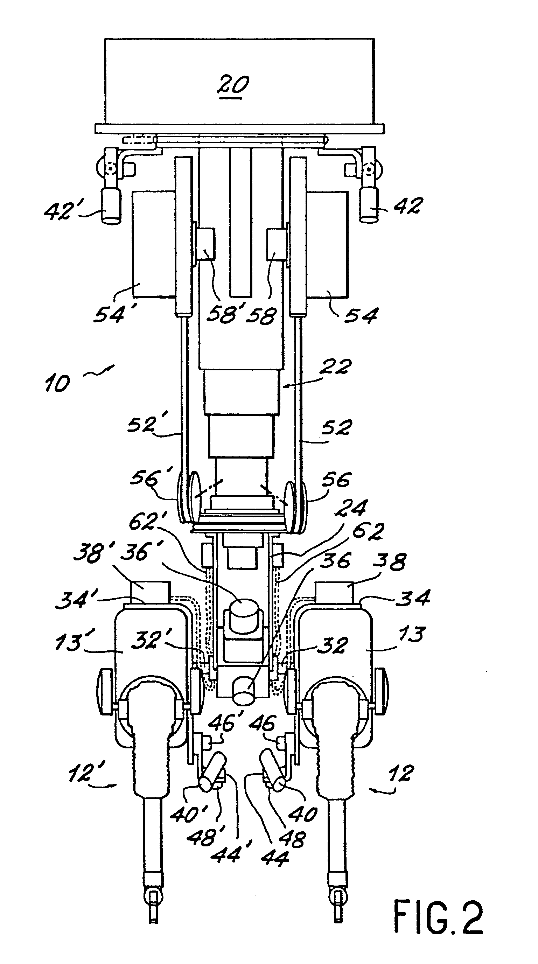

Chaque plaque constituant le corps 24 porte à sa partie inférieure un axe de pivotement 32, 32' (figure 2) qui fait saillie vers l'extérieur par rapport au corps 24. Ces axes définissent un axe de pivotement commun horizontal matérialisé par la ligne B-B' sur la figure 1. Chacun des axes 32, 32' porte un organe support en forme d'équerre 34, 34' respectivement. La rotation des organes supports 34, 34' est commandée indépendamment par des motoréducteurs 36, 36' pouvant être disposés entre les plaques constituant le corps 24. Les axes 32, 32' sont montés à l'extrémité de l'une des branches de l'équerre définie par l'organe support 34, 34' correspondant, l'extrémité de l'autre branche portant le bras esclave articulé 12, 12' par l'intermédiaire d'un dispositif de fixation 38, 38' verrouillable et déverrouillable à distance sur les corps 13 et 13' des bras esclaves 12 et 12'. Cette disposition permet de rapprocher l'axe de pivotement B-B' du centre de gravité du bras esclave.

Le dispositif de fixation 38, 38' a pour objet de permettre le montage ou la dépose de chaque bras esclave 12, 12' sans que l'ensemble soit sorti de son enceinte de travail. Les dispositifs de fixation 38, 38' doivent à ce titre assurer en même temps la fixation mécanique du bras esclave correspondant et les connexions électriques, pneumatiques et/ou hydrauliques nécessaires à la commande du bras esclave et à la transmission éventuelle de certaines informations.

Comme l'illustre à titre d'exemple la figure 7, les dispositifs de fixation 38, 38' peuvent comprendre deux doigts 70 s'étendant verticalement vers le haut à partir de la branche supérieure d'une équerre 72 fixée au-dessus du corps 13, 13' du manipulateur correspondant. Ces doigts pénètrent dans des trous 74 formés dans la branche supérieure de l'organe support 34, 34' et font saillie au-dessus de cette branche en présentant chacun une gorge 76 dans laquelle vient s'engager un levier 78 monté tournant en 80 sur l'organe 34, 34' correspondant. A cet effet, on voit sur la figure 7 que le levier 78 est muni d'encoches en arcs de cercles au niveau des trous 74. Le pivotement du levier est commandé à distance au moyen d'un autre manipulateur, en agissant sur une tige 82 du levier. La fixation mécanique est complétée par l'engagement d'un pion 84 fixé sur la branche verticale de l'équerre 72 dans une encoche appropriée formée dans la branche correspondante de l'organe 34, 34'. Les connexions électriques sont réalisées au moyen d'une prise 86 située entre les branches supérieures des équerres 72 et 34, 34'.

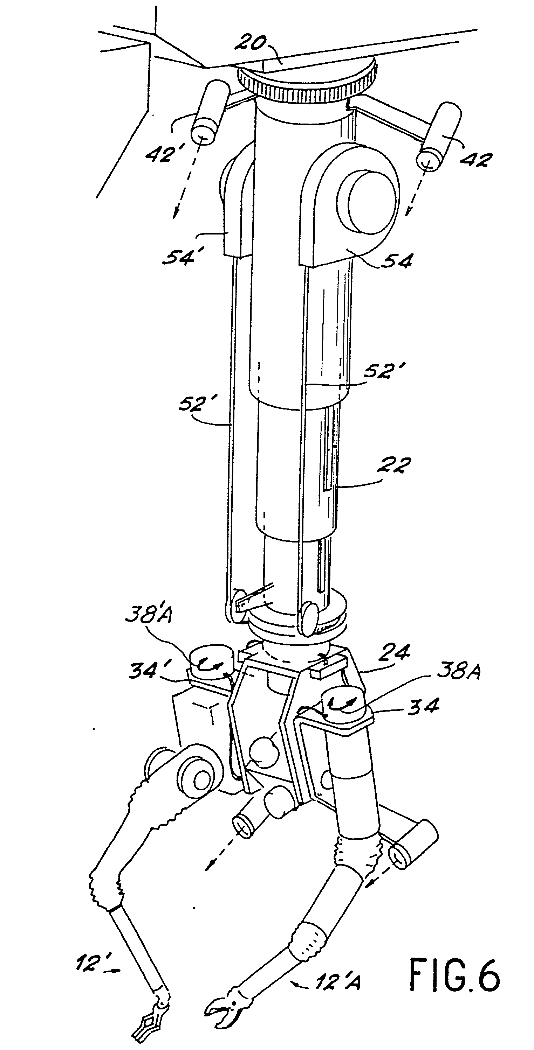

La présence des dispositifs de fixation permet de plus d'assurer l'interchangeabilité des bras articulés. Ainsi, comme le montre notamment la figure 6, l'un des bras 12, 12' peut être remplacé par un bras d'un type différent tel que le bras 12'A. Le manipulateur selon l'invention peut ainsi être équipé d'un bras esclave de précision 12 et d'un bras de positionnement 12'A pouvant être de plus grande capacité mais ne possédant pas le même nombre de degrés de liberté.

Dans la variante de réalisation représentée sur les figures 1 à 3, le support d'orientation 14 est équipé de deux organes supports 34, 34' qui portent chacun un bras esclave constitué par un manipulateur de précision. Cependant, on comprendra qu'une telle réalisation n'est pas limitative et que le support d'orientation 14 pourrait ne porter qu'un bras esclave par l'intermédiaire d'un organe support unique.

La structure qui vient d'être décrite du support d'orientation 14 selon l'invention donne aux corps 13, 13' de chaque bras esclave articulé deux degrés de liberté d'orientation qui viennent s'ajouter aux trois degrés de liberté de positionnement de ces corps obtenus grâce à l'ensemble porteur 10. Les bras esclaves peuvent ainsi être amenés à proximité de la zone de travail dans la meilleure orientation et ceci même au voisinage d'obstacles importants. On comprendra que l'ensemble de manipulation selon l'invention peut ainsi intervenir de façon précise dans des zones éloignées et difficilement accessibles.

Les bras esclaves 12, 12' peuvent être des manipulateurs à asservissement et retour d'effort tels que celui qui est décrit dans le brevet français 2 278 457 au nom du Commissariat à l'Energie Atomique.

Afin de permettre le contrôle de telles interventions dans des zones hors de la vision directe, il est nécessaire de prévoir des moyens d'observation. Ces moyens d'observation comprennent, d'une part, une caméra de télévision 40, 40' portée par chacun des organes supports 34, 34' et, d'autre part, une caméra de télévision 42, 42' disposée sensiblement à la verticale au-dessus du bras 12, 12' correspondant.

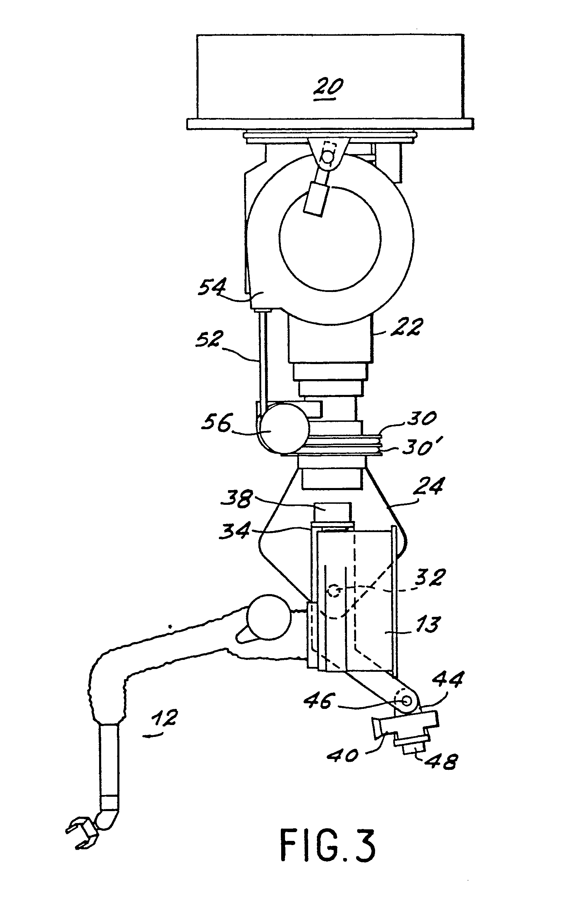

Plus précisément, dans la variante représentée, les caméras de télévision 40, 40' sont montées sur des prolongements vers le bas et vers l'arrière du bras de l'équerre constituée par l'organe support 34, 34' qui porte l'axe de pivotement 32, 32'. Les caméras 40, 40' sont portées par des platines 44, 44' (figures 2 et 3) prévues pour pivoter autour d'un axe 46, 46' parallèle à l'axe BB', et donc horizontal. Par rapport à ces platines, les caméras 40, 40' peuvent également pivoter autour d'un axe 48, 48' perpendiculaire à l'axe 46, 46'. On comprendra que cette disposition permet d'observer l'organe de préhension monté à l'extrémité libre du bras articulé 12, 12', quelle que soit la position occupée par ce bras. La commande de l'orientation des caméras 40, 40' autour des axes de pivotement 46, 46' et 48, 48' est réalisée au moyen d'actionneurs appropriés. Ces actionneurs peuvent être commandés manuellement ou asservis aux organes de commande du bras articulé.

Dans une variante non représentée, les caméras 40, 40' peuvent être portées directement par la base du bloc moteur 13, 13' de chacun des bras esclaves 12, 12'. Les connexions des organes de commande et de transmission de signaux sont alors effectuées au moyen du dispositif de fixation 38, 38'.

Dans la variante de réalisation représentée sur les figures 1 à 3, les caméras de télévision 42 et 42' sont portées par une plaque 50 disposée à l'extrémité supérieure du bras télescopique 22. Cette plaque 50 est conçue de façon à tourner avec le corps 24, afin que chacune des caméras 42, 42' reste sensiblement à la verticale au-dessus de chacun des bras esclaves correspondants 12, 12'. A cet effet, la plaque 50 peut être reliée directement au corps 24, ou indépendante et pourvue de moyens d'asservissement appropriés.

Des moyens sont prévus pour guider les câbles d'alimentation et de transmission des ordres et informations aux motoréducteurs 26, 36 et 36', aux dispositifs de fixation 38, 38' des bras articulés 12, 12' et aux caméras 40, 40' ainsi qu'aux actionneurs qui leur sont associés. Ces câbles multiconducteurs et composites, désignés par les références 52 et 52', arrivent de façon connue à l'extrémité supérieure du bras télescopique 22 par l'intérieur de ce bras et traversent des ensembles dérouleurs 54 et 54' disposés à l'extérieur et de part et d'autre de ce bras et dont les axes sont confondus et perpendiculaires à celui du bras 22. Les ensembles dérouleurs 54 et 54' assurent la tension des câbles 52 et 52'. A cet effet, ils comprennent de préférence une poulie de grand diamètre (non représentée) sur laquelle peuvent s'enrouler deux ou trois spires du câble, et une zone morte dans laquelle une longueur de câble appropriée, en spirale ou en hélice, permet d'absorber les variations de longueur du câble. Ces variations de longueur correspondent à la totalité de la course du bras télescopique 22, à laquelle s'ajoute la course de rotation maximum de support d'orientation 14 autour de l'axe AA'. Elles correspondent également à la longueur de câble (2 ou 3 spires) pouvant s'enrouler sur la poulie de grand diamètre de l'ensemble dérouleur 54, 54' correspondant. Le rappel des poulies de grand diamètre est assuré par un système connu à ressort ou à moteur couple 58, 58' (figure 2).

A la sortie des ensembles dérouleurs 54, 54', chaque câble 52, 52' descend verticalement jusqu'à une poulie de renvoi 56, 56' fixée à l'extrémité inférieure du bras 22. Les câbles 52, 52' sont ensuite fixés sur les poulies 30, 30' qui tournent avec le corps 24 autour de l'axe AA'. Ces poulies 56, 56' permettent ainsi aux câbles de s'enrouler sur les poulies 30, 30' tout en restant alignés avec les ensembles dérouleurs 54, 54'. Les câbles 52, 52' peuvent donc sortir par l'intérieur des poulies 30, 30' et être raccordés à des boîtiers de relais 60, 60' fixés sur les faces opposées des plaques constituant le corps 24. A partir des boîtiers de relais 60, 60', des câbles (non représentés) alimentent directement les motoréducteurs 26, 36 et 36' et les caméras 40 et 40' lorsque celles-ci sont portées par des prolongements des organes 34, 34' comme le montre la figure 1. Des câbles 62, 62' formant une boucle afin de tenir compte de la rotation possible des organes supports 34, 34' autour de l'axe BB' relient également les boîtiers 60, 60' aux dispositifs de fixation 38, 38', afin d'alimenter les moyens d'actionnement propres des manipulateurs que constituent les bras 12, 12'. Les câbles 62, 62' servent également à assurer le fonctionnement des caméras de télévision lorsque celles-ci sont portées par les bras moteurs des bras esclaves. Cette disposition constituant une caractéristique préférentielle de l'invention, présente l'avantage de permettre le remplacement à distance des dérouleurs et des câbles.

On pourrait également disposer ce ou ces câbles en hélice à l'extérieur du tube télescopique 22 selon une pratique connue, ou encore les placer à l'intérieur dudit tube 22 en utilisant des dérouleurs situés à la partie supérieure du chariot 20.

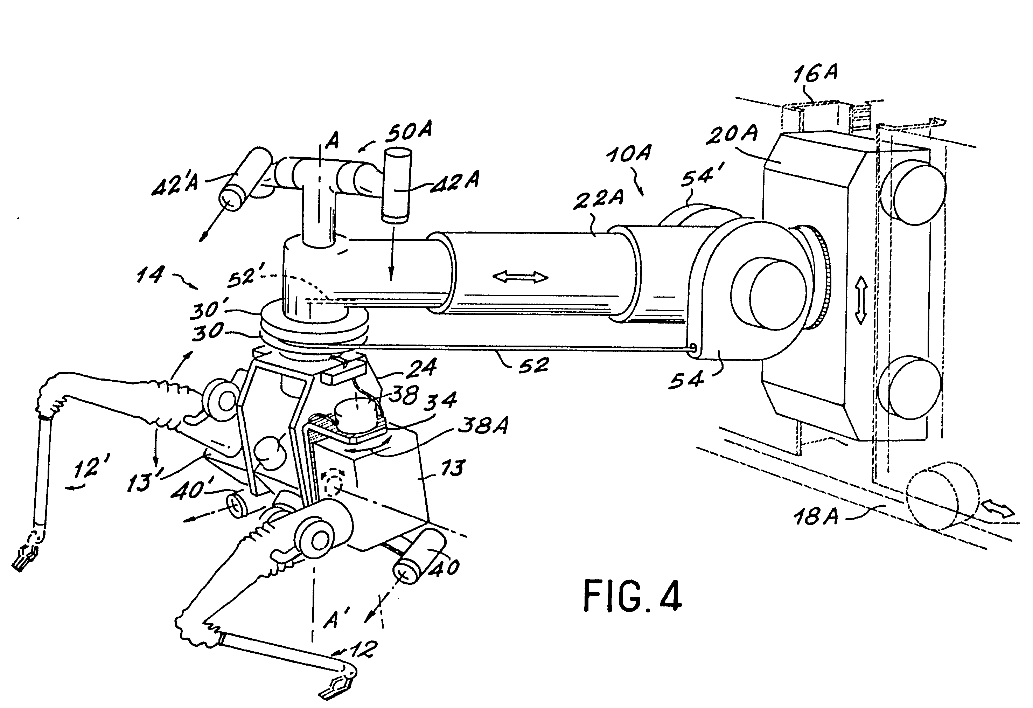

Dans la variante de réalisation de la figure 4, l'ensemble porteur 10A est différent de l'ensemble porteur 10 sur les figures 1 à 3. Ainsi, l'ensemble porteur 10A comprend une poutre verticale 16A qui se déplace selon une direction horizontale sur des rails de guidage 18A. La poutre 16A porte un chariot 20A qui se déplace verticalement et supporte lui-même un bras télescopique à axe horizontal 22A.

Comme le montre la figure 4, cette différence de structure de l'ensemble support a pour conséquence que l'axe de pivotement AA' du corps 24, qui est toujours vertical conformément à l'invention, n'est plus confondu avec l'axe du bras télescopique, mais perpendiculaire à cet axe. Le support d'orientation 14 reste identique à celui qui a été décrit en détail dans le mode de réalisation précédent. Cependant, en raison du fait que l'axe du bras 22A est perpendiculaire à l'axe AA', les poulies de renvoi sont supprimées et les câbles 52, 52', qui sortent à l'horizontale des ensembles dérouleurs 54, 54' fixés à la partie du bras 22A la plus proche du chariot 20A, s'enroulent directement sur les poulies 30, 30' solidaires du corps 24.

Une autre conséquence du changement de la structure de l'ensemble support réside dans le fait que les caméras 42A et 42'A qui sont disposées verticalement au-dessus des bras articulés 12 et 12' ne sont plus montées sur le bras télescopique 22A mais sur une structure 50A centrée sur l'axe AA' et directement solidaire du corps 24 lors de ses rotations autour de cet axe. La structure 50A définit deux bras diamétralement opposés par rapport à l'axe AA', qui portent à leur extrémité libre des plate-formes orientables (non référencées) sur lesquelles sont reçues les caméras 42A et 42'A.

Afin d'illustrer l'indépendance de la rotation des organes supports 34 et 34' et des bras esclaves 12, 12' qu'ils portent, autour de l'axe BB', on a représenté sur la figure 4 le cas où le bras gauche 12 est basculé légèrement vers le bas, et où le bras droit 12' est basculé vers le haut. Les caméras 40 et 40' prennent des orientations correspondantes. Rappelons que cette différence d'orientation des bras 12 et 12' est permise par l'utilisation de deux motoréducteurs distincts pour commander la rotation des organes 34 et 34' autour de l'axe BB'.

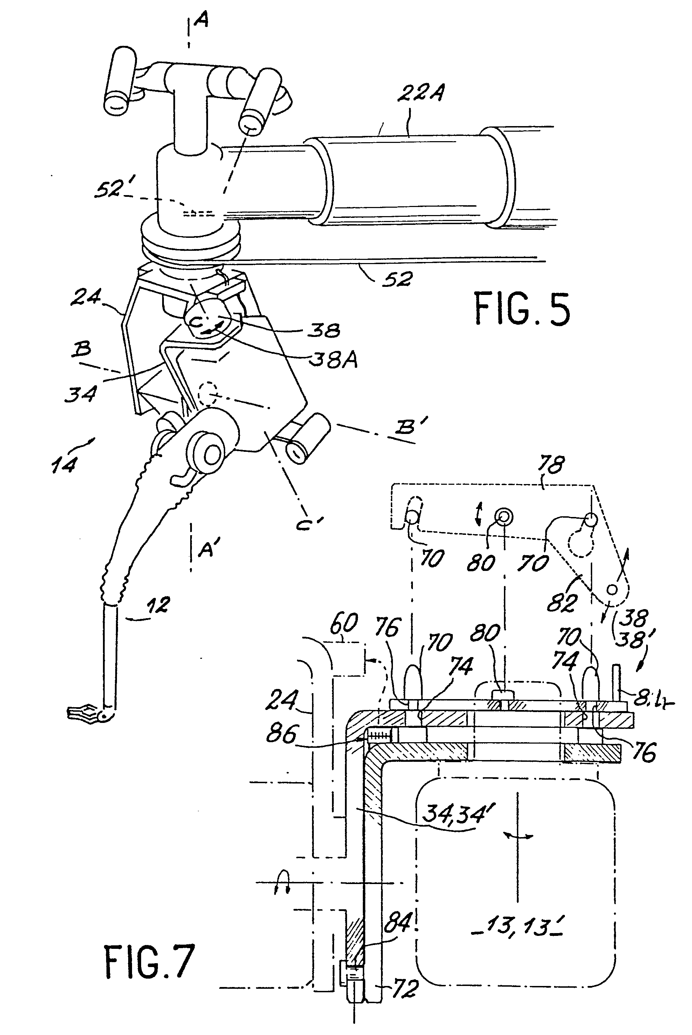

On a représenté sur la figure 5 une variante de l'invention dans laquelle l'organe support 34 porte le bras articulé 12 par l'intermédiaire d'un dispositif de fixation 38 qui peut être réalisé, comme on l'a décrit précédemment, en se réfé-

rant à la figure 7. Le dispositif de fixation 38 comprend un motoréducteur permettant de faire pivoter le bras esclave 12 autour d'un troisième axe CC' orthogonal à l'axe BB'. Selon la flèche 38A le support d'orientation 14 définit alors trois degrés de liberté au lieu de deux dans les variantes de réalisation précédentes. L'extrémité du manipulateur 12 est ainsi pourvue d'un mouvement de liberté de déplacement transversal qui permet de rapprocher ou d'éloigner l'extrémité des bras 12, 12' lorsque le support d'orientation 14 porte deux bras esclaves, contrairement à ce qui est représenté sur la figure 5. Ce degré de liberté supplémentaire permet également au bras esclave 12 d'atteindre une zone plus éloignée située dans un plan transversal à celui définit par l'ensemble porteur, lorsque ce dernier est au voisinage d'un obstacle.

Cette variante a été représentée sur les figures 1, 4 et 6 sous forme de la flèche 38A indiquant le mouvement du bloc 13 par rapport au support 34.

## Revendications

1. Manipulateur du type comprenant un ensemble porteur (10) définissant trois degrés de liberté de positionnement et au moins un bras esclave articulé (12, 12') comportant six degrés de liberté et supporté par ledit ensemble porteur et définissant les six degrés de liberté de manipulation, caractérisé en ce que le bras esclave (12, 12') est supporté par l'ensemble porteur (10) par l'intermédiaire d'un support d'orientation motorisé (14) comprenant un corps (24) monté pivotant autour d'un axe (AA') sensiblement vertical sur ledit ensemble porteur, au moins un organe support (34, 34') monté pivotant autour d'un axe (BB') sensiblement horizontal sur ledit corps et supportant le bras esclave par l'intermédiaire d'un dispositif de fixation (38, 38') verrouillable et déverrouillable à distance, des moyens (26) pour commander le pivotement du corps autour de l'axe sensiblement vertical et des moyens (36, 36') pour commander le pivotement de l'organe support autour de l'axe sensiblement horizontal et des moyens d'observation (40, 40') de l'extrémité libre du bras esclave étant portés par l'organe support.

2. Manipulateur selon la revendication 1, caractérisé en ce qu'il comprend de plus des câbles d'alimentation et de communication (52, 52') provenant de l'ensemble porteur (10) et s'enroulant sur au moins une poulie (30, 30') solidaire dudit corps et centrée sur l'axe de pivotement de ce dernier.

3. Manipulateur selon l'une quelconque des revendications 1 ou 2, caractérisé en ce qu'il comprend de plus des seconds moyens d'observation (42, 42') disposés verticalement au-dessus du bras esclave et tournant avec ledit corps autour de l'axe de pivotement (AA') de ce dernier.

4. Manipulateur selon l'une quelconque des revendications précédentes, caractérisé en ce que les moyens d'observation sont constitués par au moins une caméra de télévision à axe orientable (40, 40', 42, 42').

5. Manipulateur selon l'une quelconque des revendications précédentes, caractérisé en ce qu'il comprend deux organes supports (34, 34') disposés de part et d'autre du corps (24) et montés pivotants autour du même axe (BB') sensiblement horizontal, chacun desdits organes supports portant un bras esclave (12, 12') et un moyen d'observation (40, 40') de l'extrémité libre de ce bras.

6. Manipulateur selon la revendication 5, caractérisé en ce que les moyens (36, 36') pour commander le pivotement des organes supports sont distincts et permettent de commander le pivotement de chaque organe support indépendamment du pivotement de l'autre organe support.

7. Manipulateur selon l'une quelconque des revendications précédentes, caractérisé en ce que le dispositif de fixation (38, 38') du bras esclave (12) sur ledit organe support (34) comprend de plus un axe de pivotement perpendiculaire à l'axe sensiblement horizontal et des moyens pour commander le pivotement du bras esclave autour de cet axe.

8. Manipulateur selon l'une quelconque des revendications précédentes, dans lequel l'ensemble porteur comprend un bras télescopique d'axe vertical (22), caractérisé en ce que l'axe de pivotement (AA') dudit corps est confondu avec l'axe du bras télescopique, ce dernier portant à son extrémité inférieure au moins une poulie de renvoi (56, 56') à axe horizontal sur laquelle passe ledit câble (52, 52') avant de s'enrouler sur la poulie (30, 30') solidaire dudit corps, et à son extrémité supérieure au moins un ensemble dérouleur (54, 54') aligné verticalement avec ladite poulie de renvoi, afin d'assurer la tension du câble.

9. Manipulateur selon la revendication 8, prise en combinaison avec la revendication 3, caractérisé en ce que les seconds moyens d'observation (42, 42') sont portés par une pièce (50) tournant sensiblement avec ledit corps autour de l'axe de pivotement (AA') de ce dernier, ladite pièce étant placée à l'extrémité supérieure du bras télescopique.

10. Manipulateur selon l'une quelconque des revendications 1 à 7, dans lequel l'ensemble porteur comprend un bras télescopique à axe horizontal (22A), caractérisé en ce que ledit corps est monté pivotant à l'extrémité libre dudit bras, ce dernier portant à son autre extrémité au moins un ensemble dérouleur (54A, 54'A) aligné horizontalement avec ladite poulie (30, 30') afin d'assurer la tension du câble (52, 52').

11. Manipulateur selon la revendication 10, prise en combinaison avec la revendication 3, caractérisé en ce que les seconds moyens d'observation (42A, 42'A) sont portés par une pièce (50A) solidaire dudit corps, et disposée au-dessus de ce dernier.

12. Manipulateur selon l'une quelconque des revendications précédentes caractérisé en ce que le dispositif de fixation (34, 34') est décalé par rapport à l'axe de pivotement (BB') de l'organe support correspondant.

## Claims

1. Manipulator of the type comprising a support assembly (10) defining three degrees of freedom of positioning and at least one articulated slave arm (12, 12') having six degrees of freedom and supported by said support assembly and defining the six degrees of freedom of manipulation, characterized in that the slave arm (12, 12') is supported by the support assembly (10) by means of a motorized orientatable support (14) comprising a body (24) pivotably mounted about a substantially vertical axis (AA') on said support assembly, at least one support device (34, 34') pivotably mounted about a substantially horizontal axis (BB') on said body and supporting the slave arms through a remotely-lockable and -unlockable fixing device (38, 38'), means (26) for commanding pivoting of the body about the substantially vertical axis, and means (36, 36') for commanding pivoting of the support device about the substantially horizontal axis, and observation means (40, 40') for the free end of the slave arm being carried by said support device.

2. Manipulator according to claim 1, characterized in that it additionally comprises supply and communication cables (52, 52') issuing from the support assembly (10) and passing round at least one pulley (30, 30') attached to said body and centred on the pivoting axis of the latter.

3. Manipulator according to either of claims 1 and 2, characterized in that it additionally comprises second observation means (42, 42') disposed vertically above the slave arm and turning with said body about the pivoting axis (AA') of the latter.

4. Manipulator according to any one of the preceding claims, characterized in that the observation means are constituted by at least one television camera (40, 40', 42, 42') having an adjustable axis.

5. Manipulator according to any one of the preceding claims, characterized in that it comprises two support devices (34, 34') disposed on either side of the body (24) and pivotably mounted around the same substantially horizontal axis (BB'), each of said support devices carrying a slave arm (12, 12') and an observation means (40, 40') for the free end of the arm.

6. Manipulator according to claim 5, characterized in that the means (36, 36') for commanding pivoting of the support devices are separate from one another, and enable command of pivoting of each support device independently of pivoting of the other support device.

7. Manipulator according to any one of the preceding claims, characterized in that the fixing device (38, 38') for the slave arm (12) on said support device (34) additionally comprises a pivoting axis perpendicular to the substantially horizontal axis, and means for commanding pivoting of the slave arm around said axis.

8. Manipulator according to any one of the preceding claims, in which the support assembly comprises a telescopic arm (22) which the support assembly comprises a telescopic arm (22) with vertical axis, characterized in that the pivoting axis (AA') of the said body is identical with the axis of the telescopic arm, the latter having at its lower end at least one return pulley (56, 56') with horizontal axis, over which the said cable (52, 52') passes before passing round the pulley (30, 30') attached to said body, and having at its upper end at least one reel assembly (54, 54') vertically aligned with respect to said return pulley, whereby to ensure tensioning of the cable.

9. Manipulator according to claim 8, taken in combination with claim 3, characterized in that the second observation means (42, 42') are carried by a member (50) turning substantially with said body around the pivoting axis (AA') of the latter, said member being located at the upper end of the telescopic arm.

10. Manipulator according to any one of claims 1 to 7, in which the support assembly comprises a telescopic arm (22A) having a horizontal axis, characterized in that said body in pivotably mounted at the free end of said arm, said latter having at its other end at least one reel assembly (54A, 54'A) horizontally aligned with the said pulley (30, 30') whereby to ensure tensioning of the cable (52, 52').

11. Manipulator according to claim 10, taken in combination with claim 3, characterized in that the second observation means (42A, 42'A) are carried by a member (50A) fixed to said body, and disposed above the latter.

12. Manipulator according to any one of the preceding claims, characterised in that the fixation device (38, 38') is displaced with respect to the pivoting axis (BB') of the corresponding support device.

## Ansprüche

1. Manipulator mit einem drei Freiheitsgrade der Bewegung aufweisenden Tragteil (10) und wenigstens einem gelenkigen, sechs Freiheitsgrade aufweisenden Arbeitsarm (12, 12'), welcher von dem Tragteil getragen ist und sechs Freiheitsgrade für die Manipulation hat, dadurch gekennzeichnet, daß der Arbeitsarm (12, 12') mit dem Tragteil (10) über eine motorisierte Ausrichthalterung (14) verbunden ist, welche einen um eine zum Tragteil im wesentlichen senkrechte Achse (AA') verdrehbaren Tragkörper (24) aufweist, daß der Tragkörper wenigstens ein um eine im wesentlichen waagerechte Achse (BB') verdrehbares Tragelement (34, 34') trägt, am welchem der Arbeitsarm über eine durch Fernbedienung verriegelbare und entriegelbare Feststelleinrichtung (38, 38') angeschlossen ist und daß das Tragelement Einrichtungen (26) zum Steuern der Drehbewegung des Trägkörpers um die im wesentlichen senkrechte Achse, Einrichtungen (36, 36') zum Steuern der Drehbewegung des Tragelements um die im wesentlichen waagerechte Achse Einrichtungen (40, 40') zum Beobachten des freien Endes des Arbeitsarms trägt.

2. Manipulator nach Anspruch 1, dadurch gekennzeichnet, daß er außerdem Speise- und Übermittlungskabel (52, 52') aufweist, welche vom Tragteil (10) ausgehen und um wenigstens eine fest mit dem Tragkörper verbundene und auf dessen Drehachse zentrierte Rillenscheibe (30, 30') geführt sind.

3. Manipulator nach einem der Ansprüche 1 oder 2, dadurch gekennzeichnet, daß er außerdem zweite Beobachtungseinrichtungen (42, 42') aufweist, welche senkrecht oberhalb des Arbeitsarms angeordnet und zusammen mit dem Tragkörper um die Drehachse (AA') desselben herum verdrehabar sind.

4. Manipulator nach einem der vorstehenden Ansprüche, dadurch gekennzeichnet, daß die Beobachtungseinrichtungen wenigstens eine mit ihrer Achse ausrichtbare Fernsehkamera (40, 40', 42, 42') aufweisen.

5. Manipulator nach einem der vorstehenden Ansprüche, dadurch gekennzeichnet, daß des Tragkörpers (24) angeordnete und um ein und dieselbe im wesentlichen waagerechte Achse (BB') verdrehbar gelagerte Tragelemente (34, 34') aufweist, welche jeweils einen Arbeitsarm (12, 12') und eine Einrichtung (40, 40') zum Beobachten des freien Endes des betreffenden Arbeitsarms tragen.

6. Manipulator nach Anspruch 5, dadurch gekennzeichnet, daß die Einrichtungen (36, 36') zum Steuern der Drehbewegung der Tragelemente voneinander getrennt sind und die Steuerung der Drehbewegung jedes Tragelements unabhängig von einer Drehbewegung des anderen Tragelements erlauben.

7. Manipulator nach einem der vorstehenden Ansprüche, dadurch gekennzeichnet, daß die am Tragelement (34) angeordnete Feststelleinrichtung (38, 38') des Arbeitsarms (12) ferner eine zu der im wesentlichen waagerechten Achse lotrechte Schwenkachse sowie eine Einrichtung zum Steuern der Schwenkbewegung des Arbeitsarms um diese Achse aufweist.

8. Manipulator nach einem der vorstehenden Ansprüche, bei welchem das Tragteil einen Teleskoparm mit lotrechter Achse (22) aufweist, dadurch gekennzeichnet, daß die Drehachse (AA') des Tragkörpers mit der Achse des Teleskoparms zusammenfällt und daß der Letztere an seinem unteren Ende wenigstens eine Umlenkscheibe (56, 56') mit waagerechter Achse, um welche das Kabel (52, 52') vor der Umschlingung der fest mit der Tragkörper verbundenen Rillenscheibe (30, 30') herumgeführt ist, um and seinem oberen Ende wenigstens eine Abrolleinrichtung (54, 54') trägt, welche lotrecht auf die Umlenkscheibe ausgerichtet ist und das Kabel unter Zugspannung hält.

9. Manipulator nach Anspruch 8 in Verbindung mit Anspruch 3, dadurch gekennzeichnet, daß die zweite Beobachtungseinrichtung (42, 42') von einer am oberen Enden des Teleskoparms angeordneten Halterung (50) getragen ist, welche im wesentlichen zusammen mit dem Tragkörper um die Drehachse (AA') des Letzteren herum verdrehbar ist.

10. Manipulator nach einem der Ansprüche 1 bis 7, bei welchem das Tragteil einen Teleskoparm mit waagerechter Achse (22A) aufweist, dadurch gekennzeichnet, daß der Tragkörper verdrehbar am freien Ende des Arms gelagert ist und daß Letzterer an seinem anderen Ende wenigstens eine Abrolleinrichtung (54A, 54A') trägt, welche waagerecht auf die Rillenscheibe (30, 30') ausgerichtet ist, um das Kabel (52, 52') unter Zugspannung zu halten.

11. Manipulator nach Anspruch 10 in Kombination mit Anspruch 3, dadurch gekennzeichnet, daß die zweite Beobachtungseinrichtung (42, 42') von einer fest mit dem Tragkörper verbundenen und oberhalb desselben angeordneten Halterung (50A) getragen ist.

12. Manipulator nach einem der vorstehenden Ansprüche, dadurch gekennzeichnet, daß die Feststelleinrichtung (34, 34') in bezug auf die Drehachse (BB') des zugeordneten Tragelements versetzt angeordnet ist.

0 040 159

FIG.1

FIG.2

FIG.3

FIG. 4

0 040 159

FIG.5

FIG.7

0 040 159

FIG.6